# EUROPEAN PATENT APPLICATION

(11) **EP 2 835 949 A2**
(43) Date of publication of application: **11.02.2015**
(21) Application number: 14174532.3
(22) Date of filing: 26.06.2014
(51) Int. Cl.: H04L 29/06, H04M 1/725, H04W 4/00

(54) **Method and apparatus for managing contents**

(30) Priority: 27.06.2013 KR 20130074392
(71) Applicant: Samsung Electronics Co., Ltd, Gyeonggi-do 443-742 (KR)
(72) Inventor: Hwang, Hyungsuk, 443-742 Gyeonggi-do (KR); Choi, Youngkeun, 443-742 Gyeonggi-do (KR)
(74) Representative: Nederlandsch Octrooibureau

(57) **Abstract**

A method and an apparatus for managing contents are provided. The method includes determining a current time when a request for generating contents is made, determining a reference time corresponding to a standard time in a preset time zone based on the current time, storing the current time and the reference time in metadata of the contents, and storing the contents.

## Description

### TECHNICAL FIELD

The present disclosure relates generally to a method and an apparatus for managing contents. More particularly, the present disclosure relates to a method and an apparatus for managing contents which can manage contents generated in different tim e zones by at least one reference.

### BACKGROUND

Electronic devices (for example, a portable terminal, a mobile communi cation terminal, a smart phone, a tablet Personal Computer (PC), and the like) provide v arious functions which users require. For example, the portable terminal provides vario us functions, such as a call function, an image or video photographing function, a broad cast receiving function, an Internet access function, and the like. Further, the portable te rminal may generate and store contents (a picture, a video, and the like). At this time, th e portable terminal generally stores a time when the content is generated. The content g eneration time may be time information (hereinafter referred to as a current time) provi ded by the portable terminal.

When the portable terminal leaves one time zone and moves to another t ime zone, time information is generally reset according to the time zone to which the p ortable terminal has moved. Accordingly, the portable terminal stores a content generati on time by using the reset time information. For this reason, the portable terminal may s tore content generation times different from actual content generation sequences. For e xample, when the portable terminal moves from a region A (using standard time of tim e zone "Greenwich Mean Time (GMT)-0") to a region B (using standard time of time z one "GMT-9") and generates contents, the contents generated in the region A may have an earlier generation time than that of the contents generated in the region B even thou gh the contents generated in the region B are generated later. That is, a content storing method of the related art may have a problem in which the contents are stored in orders different from actual generation orders. Such a problem may occur since respective con tent generation times have different time reference values according to the movement o f the time zone. Accordingly, a method of efficiently managing contents generated in di fferent time zones is required.

The above information is presented as background information only to a ssist with an understanding of the present disclosure. No determination has been made, and no assertion is made, as to whether any of the above might be applicable as prior ar t with regard to the present disclosure.

### SUMMARY

Aspects of the present disclosure are to address at least the above-mentio ned problems and/or disadvantages and to provide at least the advantages described bel ow. Accordingly, an aspect of the present disclosure is to provide a method and an appa ratus for managing contents, which can manage contents generated in different time zo nes by at least one reference by storing a current time and a reference time and/or additi onal information together when the contents are generated.

Another aspect of the present disclosure is to provide a method and an a pparatus for managing contents, which modify a reference time to correspond to a refer ence time zone preset for an electronic device and upload or download contents when t he contents are transmitted and received between electronic devices, for example, when the contents are uploaded or downloaded between a server and a terminal.

In accordance with an aspect of the present disclosure, a method of man aging contents is provided. The method includes determining a current time when a req uest for generating contents is made, determining a reference time corresponding to a st andard time in a preset time zone based on the current time, storing the current time and the reference time in metadata of the contents, and storing the contents.

In accordance with another aspect of the present disclosure, an apparatus for managing contents is provided. The apparatus includes an input unit configured to r eceive a content generation request, a controller configured to determine a current time when receiving the content generation request, to determine a reference time correspon ding to a standard time in a preset time zone based on the current time, and to store the current time and the reference time in metadata of the contents, and a storage unit confi gured to store the contents requested to be generated and the metadata.

As described above, a method and an apparatus for managing contents a ccording to an embodiment of the present disclosure can store a current time at a curren t position and a reference time at a predefined time zone as metadata. The present discl osure can manage contents generated in a plurality of time zones by at least one referen ce. For example, the present disclosure can manage and/or arrange the contents based o n an actual generation order.

The present disclosure can modify a reference time of contents to a refer ence time in a time zone preset for an electronic device and upload or download the con tents when the contents are transmitted and received between electronic devices, for ex ample, when the contents are uploaded or downloaded between a server and a terminal. The present disclosure can manage contents uploaded to a plurality of electronic devic es or servers having differently set reference times or contents downloaded from a plura lity of electronic devices or servers based on a generation order automatically or manua lly according to a user's intention.

Other aspects, advantages, and salient features of the disclosure will bec ome apparent to those skilled in the art from the following detailed description, which, t aken in conjunction with the annexed drawings, discloses various embodiments of the p resent disclosure.

### BRIEF DESCRIPTION OF THE DRAWINGS

The above and other aspects, features, and advantages of certain embodi ments of the present disclosure will be more apparent from the following description ta ken in conjunction with the accompanying drawings, in which:
FIG. 1 illustrates a content managing system according to an embodime nt of the present disclosure;
FIG. 2 is a block diagram illustrating a configuration of an electronic de vice according to an embodiment of the present disclosure;
FIG. 3 is a flowchart illustrating a content managing method of an electr onic device according to an embodiment of the present disclosure;
FIG. 4 is a flowchart illustrating a process of determining a current time according to an embodiment of the present disclosure;
FIG. 5 is a flowchart illustrating a content uploading method of an electr onic device according to an embodiment of the present disclosure; and
FIG. 6 is a flowchart illustrating a content downloading method of an ele ctronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the p resent disclosure as defined by the claims and their equivalents. It includes various spec ific details to assist in that understanding but these are to be regarded as merely exempl ary. Accordingly, those of ordinary skill in the art will recognize that various changes a nd modifications of the various embodiments described herein can be made without de parting from the scope and spirit of the present disclosure. In addition, descriptions of well-known functions and constructions may be omitted for clarity and conciseness.

The terms and words used in the following description and claims are no t limited to the bibliographical meanings, but, are merely used by the inventor to enable a clear and consistent understanding of the present disclosure. Accordingly, it should b e apparent to those skilled in the art that the following description of various embodime nts of the present disclosure is provided for illustration purpose only and not for the pur pose of limiting the present disclosure as defined by the appended claims and their equi valents.

It is to be understood that the singular forms "a," "an," and "the" include plural referents unless the context clearly dictates otherwise. Thus, for example, refere nce to "a component surface" includes reference to one or more of such surfaces.

The drawings and embodiments of the present disclosure provide particu lar examples to describe the technical matters of the present disclosure and help with an understanding of the present disclosure. However, they do not limit the scope of the pr esent disclosure. It is obvious to those skilled in the art to which the present disclosure pertains that other modified embodiments based on the technical idea of the present dis closure besides the embodiments disclosed herein can be carried out.

In the following description, the term "electronic device" may be in refe rence to a mobile communication terminal, a smart phone, a tablet Personal Computer ( PC), a hand-held PC, a Portable Multimedia Player (PMP), a Personal Digital Assistant (PDA), a notebook PC, or the like.

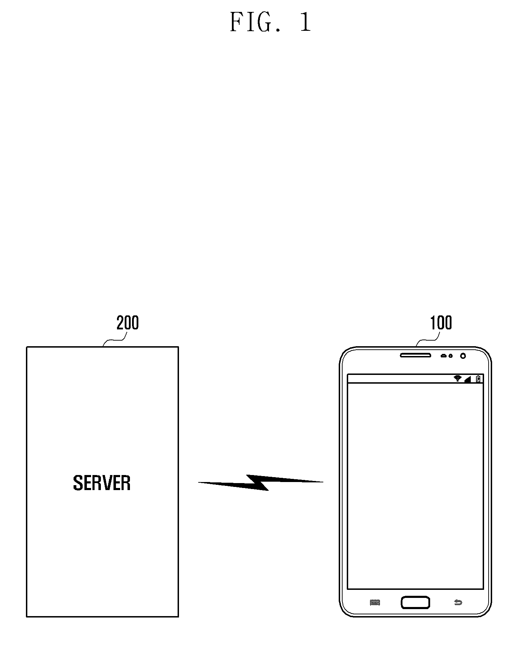

FIG. 1 illustrates a content management system according to an embodi ment of the present disclosure.

Referring to FIG. 1, the content management system may include an ele ctronic device 100 and a server 200.

The electronic device 100 may store contents (for example, an image, a picture, a video, a document, and the like). For example, the electronic device 100 may generate contents and store the generated contents, or download contents from the serve r 200 or another electronic device (not shown) and store the downloaded contents. The contents may include metadata. The metadata may include a current time and a referenc e time.

The current time may be used as the content generation time. The curren t time may be a terminal time provided by the electronic device 100 or a standard time of a region where the electronic device is located. In general, the terminal time is equal or similar to the standard time of the corresponding region, so that the current time may be the terminal time. Meanwhile, when the terminal time is different from the standard time of the corresponding region, for example, when they have a difference equal to or longer than a predetermined time, the electronic device 100 may determine the standard time as the current time. For example, when a region where the electronic device 100 i s currently located applies daylight saving time, the electronic device 100 may determin e the standard time of the corresponding region as the current time. For example, the el ectronic device 100 may receive current position information through a position inform ation receiver, such as a Global Positioning System (GPS) module, and identify the stan dard time at the current position through a website providing the standard time. When t he identified standard time does not match (or is not similar to) the terminal time, the el ectronic device 100 may determine the standard time as the current time. Alternatively, the electronic device 100 may determine the current time by compensating for the termi nal time by the applied daylight saving time (For example, by one hour).

The reference time may be used as a reference value for managing the c ontents generated in different time zones. The reference time may be Greenwich Mean Time (GMT) in a preset time zone. The reference time may include at least one of a firs t reference time corresponding to the standard time at time zone "GMT 0" and a second reference time corresponding to the standard time at a particular time zone selected by the user.

The first reference time and the second reference time may be determine d based on the current time and the position information. For example, when the curren t time is 21:00 on July 5 and the electronic device 100 is located in time zone GMT +9, the first reference time may be 12:00 on July 5. Meanwhile, when the particular region is time zone GMT +5, the second reference time may be 17:00 on July 5. The first refer ence time and/or the second reference time may be used for managing the contents gene rated in the different time zones according to actual generation orders.

The server 200 may store contents including the current time and the ref erence time. For example, the server 200 may be a cloud server which can synchronize the electronic device 100 and the contents to manage the contents. Particularly, the serv er 200 according to the embodiment of the present disclosure may set a reference time z one (hereinafter referred to as a reference time zone of the server) for managing content s generated in different time zones or contents uploaded from various electronic device s through one reference information. When the contents are uploaded from the electroni c device 100, the server 200 may modify the reference time included in the metadata of the contents to correspond to the reference time zone of the server and upload the modif ied reference time, or a side of the electronic device 100 may modify the reference time included in the metadata of the contents to correspond to the reference time zone of the server and make a request for uploading the modified reference time. Alternatively, wh en the contents are downloaded to the electronic device 100 from the server 200, the ele ctronic device 100 may modify the reference time included in the metadata of the conte nts to correspond to the reference time zone of the electronic device 100 and download the modified reference time, or a side of the server 200 may modify the reference time i ncluded in the metadata of the contents to correspond to the reference time zone of the electronic device 100 and make a request for downloading the modified reference time.

It has been described that the electronic device 100 modifies the referenc e time stored in the metadata of the contents to correspond to the server reference time zone when the electronic device 100 uploads the contents to the server 200. Further, it s hould be apparent to those skilled in the art that the electronic device 100 can modify th e reference time stored in the metadata of the contents to correspond to the reference ti me zone of the electronic device 100 when the electronic device 100 downloads the con tents from the server 200. The embodiment of the present disclosure can be applied to a case where the electronic device 100 transmits and/or receives contents to/from variou s electronic devices (for example, a notebook PC, a desktop PC, a mobile communicati on terminal, a smart phone, and the like).

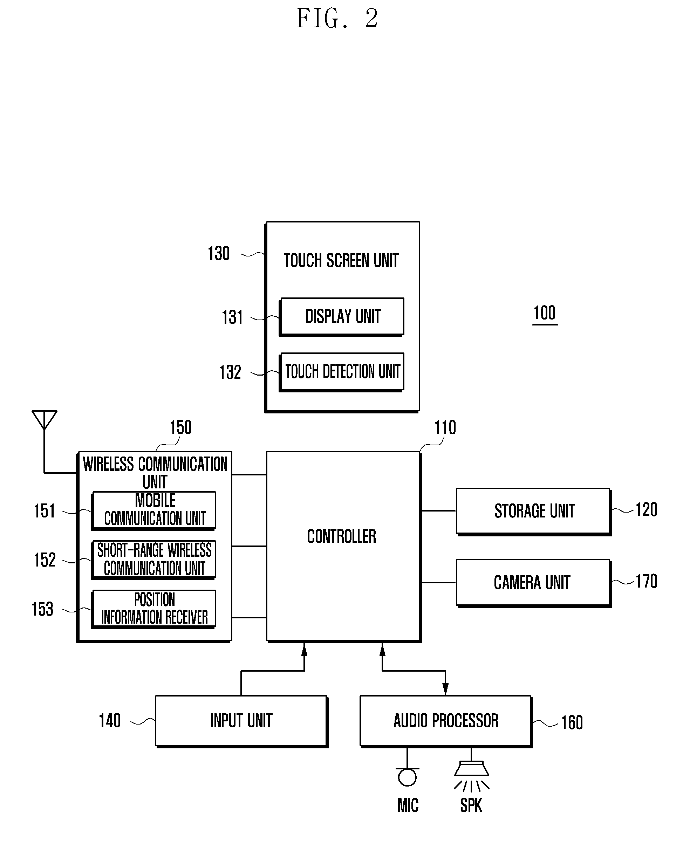

FIG. 2 is a block diagram illustrating a configuration of an electronic de vice according to an embodiment of the present disclosure.

Referring to FIG. 2, the electronic device 100 may include a controller 1 10, a storage unit 120, a touch screen 130, an input unit 140, a wireless communication unit 150, an audio processor 160, and a camera unit 170. The touch screen 130 may incl ude a display unit 131 and a touch detection unit 132, and the wireless communication unit 150 may include a mobile communication unit 151, a short-range wireless commu nication unit 152, and a position information receiver 153.

The camera unit 170 is a device for photographing a subject, and may co nvert an image generated by photographing the subject to an electrical signal and store t he electrical signal as digital data. The camera unit 170 may be implemented by a Char ge Coupled Device (CCD) image sensor or a Complementary Metal Oxide Semiconduc tor (CMOS) image sensor. The camera unit 170 may support a function of photographi ng a picture or a video. Metadata of the picture or the video photographed through the c amera unit 170 may store the current time and the reference time. Further, the metadata may include information on a photographing time, photographing conditions (an expos ure value, a shutter speed, and the like), a photographing position, and the like.

The audio processor 160 may be connected with a speaker (SPK) for out putting an audio signal transmitted/received during a call, an audio signal included in a received message, or an audio signal according to a reproduction of an audio file stored in the storage unit 120. The audio processor 160 may also be connected with a microph one (MIC) for collecting a voice of the user or other audio signals. The audio processor 160 may output a sound effect according to the photographing of the picture or the vide o through the speaker under a control of the controller 110.

The wireless communication unit 150 may support a wireless communic ation function of the electronic device 100. To this end, the electronic device 100 may i nclude the mobile communication unit 151 for supporting a mobile communication (for example, mobile communication of 2G, 3G, or 4G standard) function, the short-range wireless communication unit 152 for supporting a short-range wireless communication function, and the position information receiver 153 for supporting a position informatio n receiving function.

The mobile communication unit 151 provides support such that voice co mmunication and data communication are possible while the electronic device 100 is m oving. The mobile communication unit 151 may support a mobile communication funct ion for uploading contents to the server 200 or downloading contents from the server 2 00 under a control of the controller 110.

The short-range wireless communication unit 152 may support short-ran ge wireless communications, such as Bluetooth, Zigbee, WiFi, WiFi Direct, Near Field Communication (NFC), and the like. The short-range wireless communication unit 152 may support a function of transmitting/receiving contents between the electronic device 100 and the server 200 or another electronic device under a control of the controller 11 0.

The position information receiver 153 may receive position information of the electronic device 100. For example, the position information receiver 153 may in clude at least one of a GPS module, WiFi Positioning Systems (WPSs) using position i nformation of an Access Point (AP), and triangulation using a base station. The positio n information may be coordinate information including latitude, longitude, and altitude information. The position information of the electronic device 100 may be stored in the metadata of the contents. For example, when a picture is taken by the camera unit 170, position information received through the position information receiver 153 may be sto red in exchange image format (Exif) data of the taken picture. Alternatively, the positio n information of the electronic device 100 may be used for identifying a time zone of a current position.

The input unit 140 may include a plurality of input keys and function ke ys for receiving number or character information and setting various functions. The fun ction keys may include a direction key, a side key, and a shortcut key set to perform par ticular functions. Further, the input unit 140 may generate a key signal related to a user setting and a control of the function of the electronic device 100 and transmit the gener ated key signal to the controller 110. The input unit 140 may be configured by one or a combination of other input means, such as a qwerty keypad, a 3*4 keypad, a 4*3 keypa d, a ball joystick, an optical joystick, a wheel key, a touch key, a touch pad, a touch scr een, and the like. Meanwhile, when the electronic device 100 supports a full touch scre en, the input unit 140 may include only a part of the function keys, such as a volume ke y, a power key, a menu key, a cancellation key, a home key, and the like. The input unit 140 may generate a content generation request signal, a content upload request signal, and a content download request signal and transmit the generated signals to the controll er 110.

The touch screen 130 may perform an input function and a display funct ion. To this end, the touch screen 130 may include the display unit 131 and the touch de tection unit 132.

The display unit 131 displays information input by the user or informati on to be provided to the user as well as various menus of the electronic device 100. The display unit 131 may be formed by a Liquid Crystal Display (LCD), an Organic Light Emitting Diode (OLED), or an Active Matrix Organic Light Emitting Diode (AMOLE D). The display unit 131 may provide various screens according to the use of the electr onic device 100, for example, a home screen, a menu screen, a webpage screen, a call s creen, and the like. Further, the display unit 131 may display a picture or video photogr aphing screen, a content list displaying screen, and the like. The content list displaying screen may display contents, which have been generated in different time zones, arrang ed according to actual generation orders based on the reference time included in the met adata of the contents.

The touch detection unit 132 is a device for providing an input function and may generate a touch event when a touch input device, for example, a user's finger, a stylus pen, or an electronic pen contacts or approaches the electronic device and trans mit the generated touch event to the controller 110. For example, the touch detection un it 132 may recognize the generation of the touch event through a change in a physical q uantity (for example, capacitance, resistance, or the like) according to the contact or the approach of the touch input device. Since the touch detection unit 132 as described abo ve is obvious to those skilled in the art, a detailed description thereof will be omitted. P articularly, the touch detection unit 132 according to the present disclosure may generat e a touch signal making a request for photographing a picture or a video or a touch sign al making a request for uploading or downloading contents and transmit the generated t ouch signal to the controller 110.

The storage unit 120 may store an Operating System (OS) of the electro nic device 100 and application programs necessary for other optional functions, such as a sound reproduction function, an image or video reproduction function, a broadcast re production function, an Internet access function, a text message function, and the like. Further, the storage unit 120 may store various contents, for example, a video, a picture , a document, and the like. For example, the storage unit 120 may store metadata of con tents. The metadata may include the current time and the reference time (first reference time and/or second reference time) in the time zone where the contents are generated. T he metadata may further include information on a photographing time, photographing c onditions (an exposure value, a shutter speed and the like), a photographing position, an d the like. The metadata may be modified by the user.

The storage unit 120 may store a content management program for mana ging the contents generated in the different time zones by using one reference value (ref erence time). The content management program may include a routine of determining t he reference time based on the current time of the position where the contents are gener ated (or stored) and storing the determined reference time in the metadata, a routine of c ontrolling the current time determining process, and a routine of controlling the content uploading or downloading process.

The controller 110 may control overall operations of the electronic devic e 100 and a signal flow between internal blocks of the electronic device 100, and may p erform a data processing function for processing data. For example, the controller 110 may be configured by a Central Processing Unit (CPU), an Application Processor (AP), or the like. The controller 110 may be implemented by a single core processor or a mul ti-core processor.

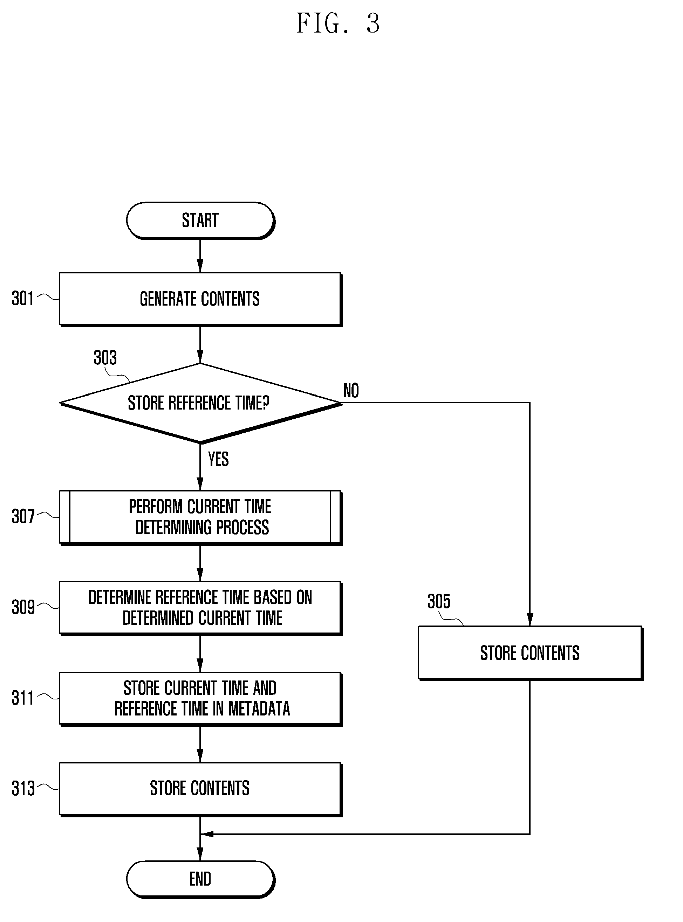

The controller 110 may manage the contents generated in the different ti me zones by using one reference value. To this end, the controller 110 may control to st ore the current time indicating the content generation time when the contents are genera ted and the reference time corresponding to the standard time in a preset time zone in th e metadata. At this time, the reference time may include the first reference time corresp onding to the standard time in time zone "GMT 0" and the second reference time corres ponding to the standard time in a particular time zone selected by the user. A descriptio n of the controller 110 will be made below with reference to FIGS. 3 to 4.

The electronic device 100 may store the reference time corresponding to the standard time in the preset time zone even though the contents are generated in diff erent time zones. Accordingly, the user of the electronic device 100 may conveniently manage contents generated in a plurality of time zones by using one reference value.

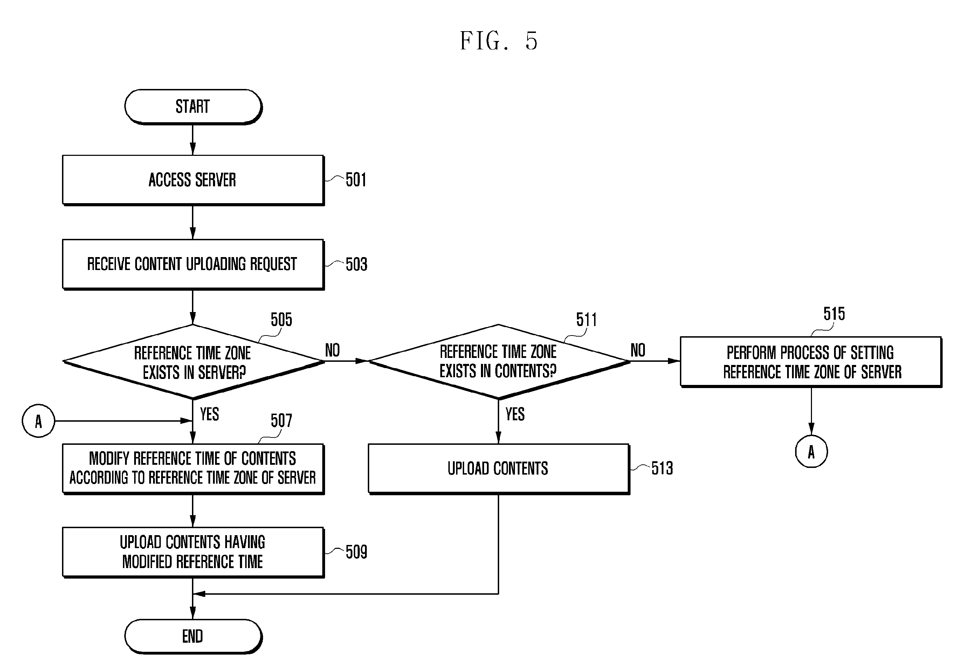

The controller 110 may identify whether the reference time zone of the s erver 200 exists when the contents are uploaded to the server 200. When the reference t ime zone of the server 200 exists, the controller 110 may modify the reference time of t he contents to correspond to the reference time zone of the server 200 and upload the m odified reference time. When the reference time zone does not exist, the controller 110 may identify whether the reference time zone of the contents of which the upload is req uested exists. When the reference time zone of the contents exists, the controller 110 m ay upload the contents based on the reference time zone of the contents. When the refer ence time zone of the contents does not exist, the controller 110 may perform a process of setting the reference time zone of the server 200. A description thereof will be descri bed below with reference to FIG. 5.

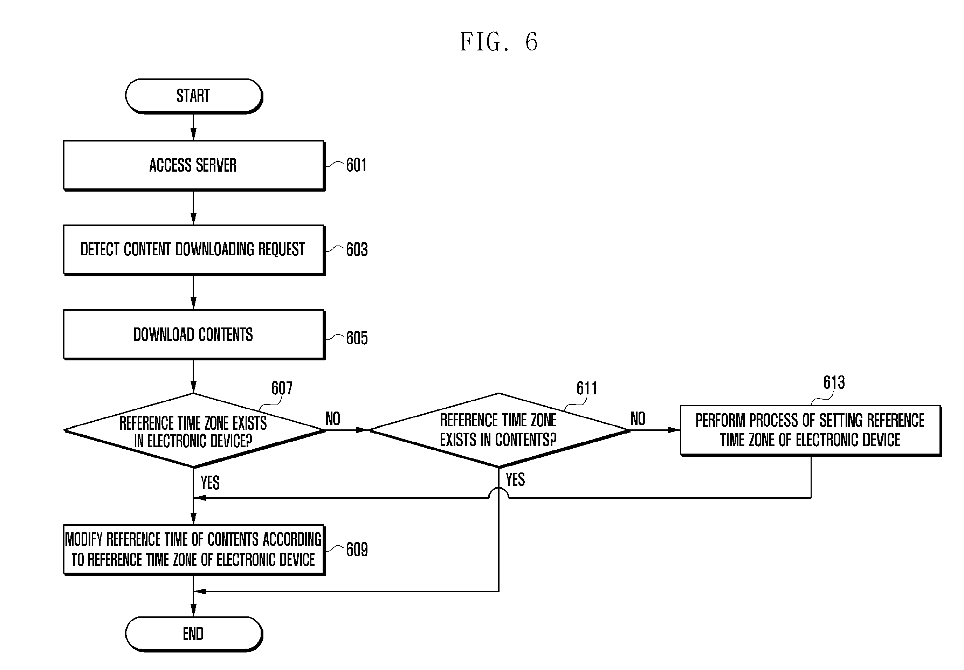

The controller 110 may identify whether the reference time zone of the e lectronic device 100 exists when the contents are downloaded from the server 200. Wh en the reference time zone of the electronic device 100 exists, the controller 110 may m odify the reference time of the downloaded contents according to the reference time zo ne of the electronic device 100. When the reference time zone of the electronic device 1 00 does not exist, the controller 110 may identify whether the reference time zone of th e downloaded contents exists. When the reference time zone of the contents exists, the controller 110 may store the downloaded contents without any modification. When the reference time zone of the contents does not exist, the controller 110 may perform a pro cess of setting the reference time zone of the electronic device 100. A description there of will be described below with reference to FIG. 6.

Meanwhile, although not illustrated in FIG. 2, the electronic device 100 may further selectively include components having additional functions, such as a sens or module for collecting various pieces of sensor information, a broadcast receiving mo dule for receiving a broadcast, a digital sound source reproduction module such as an MP3 module, and a voice recognition module for supporting a voice recognition functi on. While all the components cannot be listed since they are variously modified accordi ng to the convergence trend of digital devices, the electronic device 100 according to th e present disclosure may further include components at the equivalent level to the abov e listed components.

FIG. 3 is a flowchart illustrating a method of managing contents of the e lectronic device according to an embodiment of the present disclosure.

Referring to FIG. 3, the controller 110 may generate contents in operatio n 301. For example, the controller 110 may control photographing of a picture or a vide o by using the camera unit 170. Alternatively, the controller 110 may control document writing.

The controller 110 may identify whether the reference time is stored in o peration 303. When the reference time is not stored, the controller 110 may proceed to operation 305 to store the contents. For example, as in the related art, the controller 110 may store the terminal time provided by the terminal as the content generation time in t he metadata of the contents and store the contents.

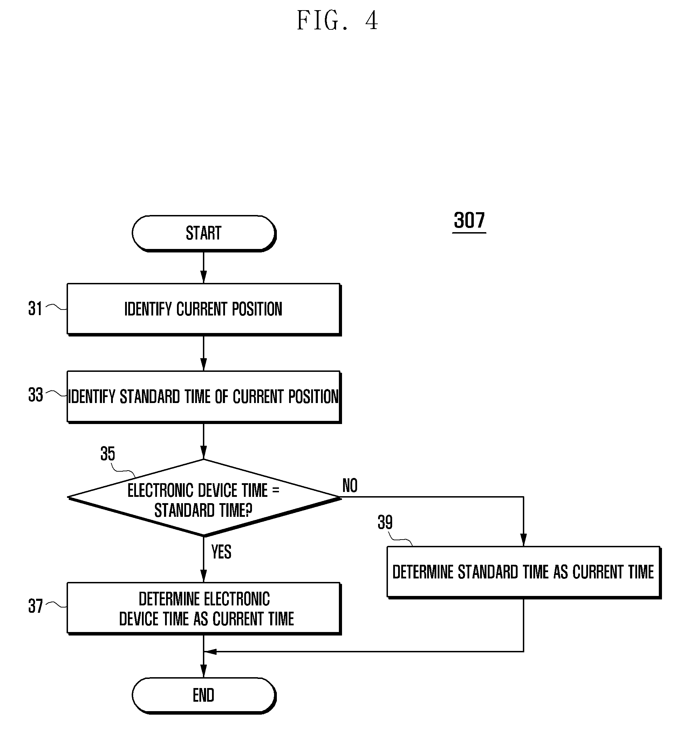

In contrast, when the reference time is stored, the controller 110 may pro ceed to operation 307 to perform a current time determining process. A description of t he current time determining process will be provided below with reference to FIG. 4.

The controller 110 may determine the reference time based on the deter mined current time in operation 309. At this time, the reference time may include the fir st reference time corresponding to the standard time in a Greenwich region and the seco nd reference time corresponding to the standard time in a particular time zone set by the user. For example, when the current time of the region using the standard time in time zone "GMT -10" is 11:00 on July 5, the first reference time is set as the standard time i n time zone "GMT 0", and the second reference time is set as the standard time in time zone "GMT +9", the first reference time may be 21:00 on July 5 and the second referen ce time may be 6:00 on July 6.

When the reference time is determined, the controller 110 may store the current time and the reference time in metadata in operation 311 and store the content i n operation 313. For example, metadata of the stored content may include the current ti me "11:00 on July 5", the first reference time "21:00 on July 5", and the second referen ce time "6:00 on July 6".

The electronic device 100 may further store the reference time as well as the current time when the content is generated and may easily manage contents generat ed in different time zones by using the reference time. For example, when contents are arranged using the reference time, the contents are arranged according to an actual gene ration order. Accordingly, the embodiment of the present disclosure can address the pro blem of the related art in which the contents are arranged differently from the actual ge neration order.

It has been described as an example that the electronic device generates or uploads contents. However, the embodiment of the present disclosure may be applie d to a case where the contents are downloaded from the server 200 or other electronic d evices. For example, when contents including the reference time are downloaded, the c ontroller 110 may modify the reference time included in metadata of the content to corr espond to a time zone of a terminal.

FIG. 4 is a flowchart illustrating a process of determining a current time according to an embodiment of the present disclosure.

Referring to FIG. 4, the controller 110 may identify a current position in operation 31. The current position may be identified through the position information re ceiver 153, such as a GPS module. Alternatively, the current position may be identified through a WiFi Positioning System (WPS) using position information of an AP and tria ngulation using a base station.

The controller 110 may identify the standard time of the current position in operation 33. For example, the controller 110 may identify the standard time of the c urrent position by accessing a website providing the standard time.

The controller 110 may identify whether the terminal time and the stand ard time match each other in operation 35. The terminal time may be transmitted from t he base station or provided using a Real Time Clock (RTC) within the electronic device 100.

When the terminal time and the standard time match each other, the cont roller 110 may determine the terminal time as the current time in operation 37. In contr ast, when the terminal time and the standard time do not match each other, the controlle r 110 may determine the standard time identified in operation 33 as the current time in operation 39.

The aforementioned current time determining process is performed to pr event the reference time of contents generated in a particular region applying the daylig ht saving time from having an error by an application time of the daylight saving time ( for example, one hour). Accordingly, the electronic device 100 may manage (for examp le, arrange) contents generated in various time zones with the same reference (first refer ence time or second reference time).

FIG. 5 is a flowchart illustrating a content uploading method of an electr onic device according to an embodiment of the present disclosure.

Referring to FIG. 5, the controller 110 of the electronic device 100 may access the server 200 in operation 501. The server 200 may be a cloud server. The contr oiler 110 may receive a content upload request in operation 503. When receiving the co ntent upload request, the controller 110 identifies whether a reference time zone exists i n the server 200 in operation 505. Meanwhile, the order of operations 501 and 503 may be changed or the operations may be performed concurrently. That is, the controller 11 0 may access the server 200 when receiving the content upload request.

When the reference time zone exists in the server 200, the controller 110 may modify the reference time included in metadata of the content according to the ref erence time zone of the server 200 in operation 507 and upload the content having the modified reference time to the server 200 in operation 509. For example, when the refer ence time of the server 200 is set as "GMT +9" and the reference time of the content to be uploaded is "GMT 0, 10:00 on July 5", the controller 110 may modify the reference time of the content to "GMT +9, 19:00 on July 5" and upload the content having the m odified reference time.

Meanwhile, when the reference time zone does not exist in the server 20 0 in operation 505, the controller 110 may identify whether the reference time zone exis ts in the metadata of the content in operation 511. When the reference time zone exists i n the metadata of the content, the controller 110 may upload the content requested to be uploaded to the server 200 without any modification of the reference time in operation 513. In contrast, when the reference time zone does not exist in the metadata of the cont ent in operation 511, the controller 110 may perform a process of setting the reference t ime zone of the server 200 in operation 515. When the reference time zone of the server 200 is set, the controller 110 may perform the above described process in operation 50 7.

Meanwhile, although it has been described that the electronic device 100 uploads the content to the server 200 after modifying the reference time of the content, the present disclosure is not limited thereto. For example, in another embodiment of the present disclosure, the electronic device 100 transmits reference time zone information when uploading the content. When the upload of the content is completed, the referenc e time of the content may be modified according to the reference time zone of the electr onic device 100 which the server 200 receives.

FIG. 6 is a flowchart illustrating a content downloading method of an ele ctronic device according to an embodiment of the present disclosure.

Referring to FIG. 6, the controller 110 of the electronic device 100 may access the server 200 in operation 601. For example, the controller 110 may access the server 200 which stores contents, such as a cloud server, a web server, or the like. Whe n the access to the server 200 is made, the controller 110 may display a list of the conte nts stored in the server 200 on the display unit 131.

The controller 110 may detect a content download request in operation 6 03 and download contents requested to be downloaded in operation 605. For example, t he user of the electronic device 100 may select at least one content from the list and inp ut a download command of the selected content.

The controller 110 may identify whether the reference time zone of the e lectronic device 100 exists in operation 607. When the reference time zone of the electr onic device 100 exists, the controller 110 may modify the reference time of the downlo aded content according to the reference time zone of the electronic device 100 in operat ion 609. For example, when the reference time zone of the electronic device 100 is set a s "GMT +9" and the reference time of the content downloaded from the server 200 is " GMT 0, 10:00 on July 5", the controller 110 may modify the reference time of the cont ent to "GMT +9, 19:00 on July 5" and download the content having the modified refere nce time.

When the reference time zone of the electronic device 100 does not exist in operation 607, the controller 110 may identify whether the reference time zone exist s in the content in operation 611. When the reference time zone of the content exists in operation 611, the controller 110 may store the downloaded content without any modifi cation of the reference time of the downloaded content and terminate the content downl oading process. In contrast, when the reference time zone of the content does not exist i n operation 611, the controller 110 may perform a process of setting the reference time zone of the electronic device 100 in operation 613. When the reference time zone of the electronic device 100 is completely set, the controller 110 may modify the reference ti me of the downloaded content according to the reference time zone of the electronic de vice 100 and store the content in operation 609.

Meanwhile, although it has been described that the electronic device 100 modifies the reference time of the content after downloading the content, the present di sclosure is not limited thereto. For example, in another embodiment of the present discl osure, when the download of the content is requested, the server 200 may identify the r eference time zone of the electronic device 100 and modify the reference time of the co ntent according to identified the reference time zone of the electronic device 100, and t hen transmit the content to the electronic device 100.

The content managing method according to various embodiments of the present disclosure may be implemented in a form of a program command which can be executed through various computer means and may be recorded in a computer-readable recording medium. The computer-readable recording medium may include a program command, a data file, and a data structure alone or a combination thereof. Meanwhile, t he program command recorded in the recording medium is specially designed and confi gured for the present disclosure, but may be used after being known to those skilled in c omputer software fields. The computer-readable recording medium includes magnetic media such as hard disks, floppy disks and magnetic tapes, optical media such as a Co mpact Disc Read-Only Memory (CD-ROM) and a Digital Versatile Disc (DVD), magn eto-optical media such as floptical disks, and hardware devices such as a Read-Only M emory (ROM), a Random Access Memory (RAM) and a flash memory, which are speci ally configured to store and perform program commands. Further, the program comman d includes a machine language code generated by a compiler and a high-level language code executable by a computer through an interpreter and the like. The hardware device s may be configured to operate as one or more software modules to perform the operati ons of the present disclosure.

Electronic devices having a touch sensor unit according to the various e mbodiments of the present disclosure have been described above with reference to the d rawings and specific terms have been used. However, the description and terms have be en used in a general meaning merely to easily describe the technical contents of the pre sent disclosure and to help the understanding of the present disclosure. The present disc losure is not limited to the various embodiments as described above. That is, it is appar ent to those skilled in the art that other various embodiments based on the technical ide a of the present disclosure can be implemented.

While the present disclosure has been shown and described with referen ce to various embodiments thereof, it will be understood by those skilled in the art that various changes in form and details may be made therein without departing from the sp irit and scope of the present disclosure as defined by the appended claims and their equi valents.

## Claims

1. A method of managing contents, the method comprising:
determining a current time when a request for generating contents is made;
determining a reference time corresponding to a standard time in a preset time zone based on the current time;
storing the current time and the reference time in metadata of the contents; and
storing the contents.

2. The method of claim 1, wherein the reference time includes at least one of a first reference time corresponding to a standard time of a reference time zone and a second reference time corresponding to a standard time of a particular time zone selected by a user.

3. The method of claim 1, wherein the determining of the current time comprises:
identifying whether a terminal time provided by an electronic device matches a standard time at a current position;
when the terminal time matches the standard time, determining the terminal time as the current time; and
when the terminal time does not match the standard time, determining the standard time as the current time.

4. The method of claim 1, wherein the stored contents are arranged and displayed based on the current time or the reference time.

5. The method of claim 1, further comprising:
receiving a request for uploading the stored contents to a server;
identifying whether a reference time zone of the server exists;
when the reference time zone of the server exists, modifying the reference time stored in the metadata of the contents to correspond to the reference time zone of the server and uploading the contents;
when the reference time zone of the server does not exist, identifying whether the reference time zone exists in the metadata of the contents requested to be uploaded;
when the reference time zone exists in the metadata, uploading the contents requested to be uploaded to the server without any modification of the reference time; and
when the reference time zone does not exist in the metadata, performing a process of setting the reference time zone of the server.

6. The method of claim 1, further comprising:
downloading contents from the server by an electronic device;
identifying whether a reference time zone of the electronic device exists;
when the reference time zone of the electronic device exists, modifying the reference time stored in the metadata of the contents to correspond to the reference time zone of the electronic device;
when the reference time zone of the electronic device does not exist, identifying whether the reference time zone exists in the metadata of the downloaded contents;
when the reference time zone exists in the metadata, storing the downloaded contents without any modification of the reference time; and
when the reference time zone does not exist in the metadata, performing a process of setting the reference time zone of the electronic device.

7. An apparatus for managing contents, the apparatus comprising:
an input unit configured to receive a content generation request;
a controller configured to determine a current time when receiving the content generation request, to determine a reference time corresponding to a standard time in a preset time zone based on the current time, and to store the current time and the reference time in metadata of the contents; and
a storage unit configured to store the contents requested to be generated and the metadata.

8. The apparatus of claim 7, wherein the reference time includes at least one of a first reference time corresponding to a standard time of a reference time zone and a second reference time corresponding to a standard time of a particular time zone selected by a user.

9. The apparatus of claim 7, wherein, when the current time is determined, the controller identifies whether a terminal time provided by an electronic device matches a standard time at a current position, determines the terminal time as the current time when the terminal time matches the standard time, and determines the standard time as the current time when the terminal time does not match the standard time.

10. The apparatus of claim 7, wherein the contents are arranged and displayed based on the current time or the reference time.

11. The apparatus of claim 7, wherein, when receiving a request for uploading the contents to a server, the controller identifies whether a reference time zone of the server exists, and modifies the reference time stored in the metadata of the contents to correspond to the reference time zone of the server and uploads the contents when the reference time zone of the server exists.

12. The apparatus of claim 11, wherein, when the reference time zone of the server does not exist, the controller controls to identify whether the reference time zone exists in the metadata of the contents requested to be uploaded, and to upload the contents requested to be uploaded to the server without any modification of the reference time when the reference time zone exists in the metadata.

13. The apparatus of claim 12, wherein, when the reference time zone does not exist in the metadata, the controller controls to perform a process of setting the reference time zone of the server.

14. The apparatus of claim 7, wherein, when the contents are downloaded from the server, the controller controls to identify whether a reference time zone of the electronic device exists, and to modify the reference time stored in the metadata of the contents to correspond to the reference time zone of the electronic device when the reference time zone of the electronic device exists.

15. The apparatus of claim 14, wherein, when the reference time zone of the electronic device does not exist, the controller controls to identify whether the reference time zone exists in the metadata of the downloaded contents, to store the downloaded contents without any modification of the reference time when the reference time zone exists in the metadata, and to perform a process of setting the reference time zone of the electronic device when the reference time zone does not exist in the metadata.
